# EUROPÄISCHE PATENTSCHRIFT

(11) **EP 1 576 304 B1**
(45) Veröffentlichungstag und Bekanntmachung des Hinweises auf die Patenterteilung: **05.11.2008**
(21) Anmeldenummer: 03767751.5
(22) Anmeldetag: 05.12.2003
(51) Int. Cl.: F16F 1/38, B25B 27/28

(54) **VERFAHREN ZUR HERSTELLUNG VON RUNDLAGERN, INSBESONDERE IN AUTOMOBILEN**
METHOD FOR PRODUCING CYLINDRICAL BEARINGS, IN PARTICULAR FOR AUTOMOBILES
PROCEDE DE FABRICATION DE PALIERS RONDS, EN PARTICULIER POUR VEHICULES AUTOMOBILES

(30) Priorität: 16.12.2002 DE 10258972
(43) Veröffentlichungstag der Anmeldung: 21.09.2005
(73) Patentinhaber: BASF SE, 67056 Ludwigshafen (DE)
(72) Erfinder: WULF, Andreas, 49406 Barnstorf (DE)
(86) Internationale Anmeldenummer: PCT/EP2003/013749
(87) Internationale Veröffentlichungsnummer: WO 2004/055408

(56) Entgegenhaltungen:
- DE-U- 20 111 169
- DE-U- 20 201 879
- GB-A- 387 178
- GB-A- 520 340
- US-A- 4 574 447
- PATENT ABSTRACTS OF JAPAN vol. 1996, no. 09, 30. September 1996 (1996-09-30) & JP 08 132549 A (TOKAI RUBBER IND LTD), 28. Mai 1996 (1996-05-28)
- PATENT ABSTRACTS OF JAPAN vol. 014, no. 447 (M-1029), 25. September 1990 (1990-09-25) & JP 02 176226 A (TOKAI RUBBER IND LTD), 9. Juli 1990 (1990-07-09)

## Beschreibung

Die Erfindung betrifft Verfahren zur Herstellung von Rundlagern enthaltend mindestens eine hohle bevorzugt zylindrische bevorzugt vormontierte Außenbuchse (i), mindestens ein hohles bevorzugt zylindrisches bevorzugt elastisches Lagerelement (ii) und mindestens eine hohle bevorzugt zylindrische Innenbuchse (iii). Des weiteren bezieht sich die Erfindung auf Automobile oder Lastkraftwagen enthaltend Rundlager erhältlich durch das erfindungsgemäße Verfahren.

Rundlager werden in Automobilen beispielsweise innerhalb des Fahrwerks verwendet und sind allgemein bekannt. Mit Hilfe von Rundlagern werden im Automobil Aggregate, Getriebe, Motoren, Fahrwerksbauteile u.a. untereinander oder mit der Karosserie verbunden. Dabei erfüllen sie durch die Verwendung von Elastomerwerkstoffen die Funktion der elastischen Lagerung; andererseits sind sie auf Grund ihrer viskosen Eigenschaften in der Lage, Energie zu dissipieren und damit Schwingungen zu dämpfen.

Dabei wird ein hohes Maß an Dämpfung besonders für die Bedämpfung großer Amplituden von niederfrequenten Schwingungen benötigt, die z.B. die Anbindung der Stossdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Rundlager ist abhängig vom intrinsischen Dämpfungsvermögen des eingesetzten Elastomerwerkstoffes.

Rundlager und deren Herstellung sind bekannt. Beispielsweise beschreibt die GB 520 340 ein Verfahren zur Herstellung von Rundlagern die eine hohle Außenbuchse, ein hohles Lagerelement und eine hohle Innenbuchse enthalten. Die Außenbuchse, die das Rundlager enthalten soll, ist vorhanden und das Lagerelement wird mit der hohlen Innenbuchse in die vormontierte Außenbuchse gepresst. Die DE 201 11 169 U1 beschreibt eine Vorrichtung mit der man radial elastische Dämpfungsmittel mit einem radial elastischen Einpressmittel herstellen oder demontieren kann. Die US 4, 574,447 beschreibt eine konische Vorrichtung zum Einpressen von elastischen Dämpfungselementen. Schließlich wird in der JP 08 132549 A der Einpressdruck eines Dämpfungselementes dadurch verringert, dass der äußere Durchmesser der festen Außenbuchse mittig verjüngt wird.

Aufgabe der vorliegenden Erfindung war es, ein Verfahren zur Herstellung von Rundlagern enthaltend (i) hohle bevorzugt zylindrische Außenbuchse, (ii) hohles bevorzugt elastisches bevorzugt zylindrisches Lagerelement und (iii) hohle bevorzugt zylindrische Innenbuchse zu entwickeln, das gegenüber den üblichen Verfahren deutlich schneller und einfacher und somit kostengünstiger ist. Dieses neue Verfahren sollte insbesondere für Rundlager, die in Automobilen oder Lastkraftwagen zum Einsatz kommen, dort insbesondere Rundlager, deren Außenbuchse an der Karosserie befestigt wird oder Teil der Karosserie ist, in Frage kommen.

Diese Aufgabe konnte dadurch gelöst werden, dass die Außenbuchse in dem Objekt, das das Rundlager enthalten soll, vorhanden, bevorzugt vormontiert ist und man anschließend das Lagerelement (ii) und die hohle Innenbuchse (iii) in die vormontierte Außenbuchse (i) presst, d.h. in den Hohlraum der Außenbuchse (i) montiert, wobei bevorzugt das hohle Lagerelement (ii) in dem Hohlraum der hohlen Außenbuchse positioniert wird und die hohle Innenbuchse (iii) in dem Hohlraum des hohlen Lagerelementes (ii), wobei man zur Montage des (ii) hohlen Lagerelementes und der (iii) hohlen Innenbuchse in die vorhandene Außenbuchse (i) eine Einpressvorrichtung (iv) verwendet, die mindestens einen Stempel (v) und mindestens eine äußere Hülse (vi) aufweist, wobei der Stempel zweiteilig aufgebaut ist und ein Teil des Stempels (va) die Innenbuchse (iii) drückt und ein weiterer Teil (vb), der mit (va) synchron bewegt wird, das Lagerelement presst. Erfindungsgemäß wird somit nicht das gesamte Rundlager enthaltend (i), (ii) und (iii) komplett fertig montiert und anschließend in das Objekt, in dem das Rundlager eingesetzt werden soll, eingebaut. Erfindungsgemäß weist das Objekt, in dem das Rundlager zum Einsatz kommen soll, bereits eine Einrichtung, die als Außenbuchse dienen kann, auf. D.h. die Außenbuchse wird erst mit dem Objekt montiert oder ist bereits als integraler Teil des Objekts geplant und erst anschließend erfolgt die Montage des Lagerelementes (ii) und der Innenbuchse (iii) mit der Außenbuchse (i). Dies bietet folgende Vorteile:

Die Lagerelemente können auf der Basis von Halbzeugen hergestellt werden, so dass Änderungen des Materials und der Geometrie sehr einfach durchzuführen sind. Weiterhin sind qualitätssichernde Maßnahmen an den Lagerelementen sehr leicht durchführbar. Die Prozeßsicherheit wird dadurch erhöht. Die Lagerelemente können sehr flexibel zusammengesetzt werden, so dass beispielsweise Lagerelemente mit unterschiedlichen mechanischen Eigenschaften miteinander kombiniert werden können. Die Bauart solcher Lager erübrigt die Außenhülse und spart somit ein Einzelteil. Zudem können durch die Bauart solcher Lager Kalibrierschritte gespart werden, die bei Rundlagern konventioneller Bauart durchgeführt werden müssen. Außerdem können Haftvermittlern bei der Fertigung gespart werden.

Bevorzugt wird somit erst die Außenbuchse mit dem Objekt, das das Rundlager enthalten soll, montiert, d.h. verbunden, beispielsweise durch Verschrauben oder Schweißen, und anschließend das Lagerelement (ii) und die Innenbuchse (iii) in den Hohlraum der Außenbuchse (i) eingeführt. In einer anderen bevorzugten Ausführungsform ist die Außenbuchse (i) Bestandteil des Objektes, das das Rundlager enthalten soll.

Bevorzugt wird man die hohle Innenbuchse (iii) erst in dem Hohlraum des hohlen zylindrischen Lagerelements (ii) positionieren und anschließend das hohle zylindrische Lagerelement (ii) enthaltend die hohle Innenbuchse (iii) in die vorhandene, bevorzugt mit dem Objekt, in dem das Rundlager zum Einsatz kommen soll, vormontierte Außenbuchse (i), bevorzugt in den Hohlraum der vorhandenen, bevorzugt vormontierten Außenbuchse (i) montieren, bevorzugt pressen, d.h. in den Hohlraum der Außenbuchse (i) einfügen.

Dabei kann man bevorzugt eine Vorspannung des Lagerelementes (ii) erzeugen, d.h. bevorzugt presst man (ii) unter Vorspannung und bevorzugt unter Zuhilfenahme von Einpresshilfsmitteln in die Außenbuchse (i). Unter Vorspannung ist dabei insbesondere zu verstehen, dass die Wandstärke des Lagerelementes (ii) kleiner ist als der Abstand zwischen der Innenbuchse (iii) und der Außenbuchse (i), d.h. das Lagerelement liegt in radialer Richtung gestaucht vor.

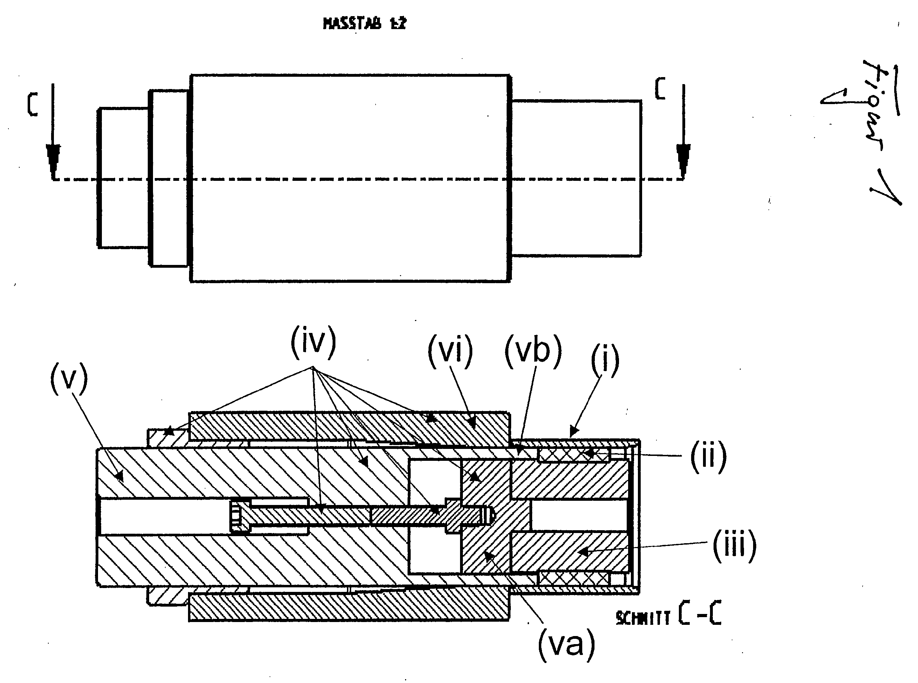

Bevorzugt kann man zur Montage des (ii) hohlen Lagerelementes und der (iii) hohlen Innenbuchse in die vormontierte Außenbuchse (i) eine Einpressvorrichtung (iv) verwendet, die mindestens einen Stempel (v) und mindestens eine äußere Hülse (vi) aufweist. Das bevorzugte Beispiel einer Einpressvorrichtung ist in der Figur 1 dargestellt. Bevorzugt kann man dabei vor der Montage des (ii) hohlen Lagerelementes und der (iii) hohlen Innenbuchse in die vormontierte Außenbuchse (i) das oder die hohle Lagerelemente (ii) und die hohle(n) Innenbuchse(n) (iii) auf dem Stempel (v) und zumindest teilweise innerhalb der äußeren Hülse (vi) positionieren. Aus dieser Position zumindest teilweise innerhalb der äußeren Hülse (vi) kann dann das hohle Lagerelement (ii) und die hohle Innenbuchse (iii) in die Außenbuchse geschoben oder gepresst werden. Bevorzugt läuft die äußere Hülse (vi) konisch zu, d.h. sie verjüngt sich in Montagerichtung , d.h. in die Richtung in die Lagerelement (ii) und Innenbuchse (iii) geschoben werden. Aufgrund dieser bevorzugten Verjüngung wird das hohle Lagerelement (ii) beim Einpressen mittels des Stempels (v) in die vormontierte Außenbuchse (i) im Radius gestaucht, d.h. es liegt zwischen Außenbuchse (i) und Innenbuchse (iii) unter Spannung vor.

In der Figur 1 ist der Stempel ausgefahren dargestellt, d.h. (ii) und (iii) befinden sich bereits in der Außenbuchse (i). Der bevorzugte konische Verlauf der Außenhülse (vi) ist der Figur 1 aber gut zu entnehmen. In der Figur 1 ist der Stempel zweiteilig aufgebaut. Ein Teil des Stempels (va) drückt die Innenbuchse (iii), ein weiterer Teil (vb), der mit (va) bevorzugt synchron bewegt wird, presst das Lagerelement (ii). Die Abmessungen können weitgehend beliebig gewählt werden und sich bevorzugt nach den Abmessungen bekannter Rundlager richten. Besonders bevorzugt werden die Abmessungen so gewählt, dass das Lagerelement (ii) zwischen (i) und (iii) gestaucht, d.h. wie dargestellt unter Vorspannung vorliegt. Die Länge das Rundlager und der Gesamtdurchmesser sowie der Durchmesser des Hohlraums der Innenbuchse (iii) können sich nach dem Einsatz und den zu lagernden Objekten richten. Die Wahl geeigneter Abmessungen ist dem Fachmann geläufig.

Bei dem Objekt, das das Rundlager enthalten soll, kann es sich bevorzugt um das Fahrwerk oder die Karosserie oder Teile der Karosserie, beispielsweise den Fahrschemel, eines Automobils oder eines Lastkraftwagens handelt. Dabei kann die Außenbuchse (i) entweder mit der Karosserie vormontiert werden, beispielsweise verschraubt oder angeschweißt werden, oder bereits bei der Entwicklung der Karosserie als Teil der Karosserie geplant werden und somit bei der Montage von Innenbuchse (iii) und Lagerelement (ii) als integrales Teil der Karosserie oder des Fahrwerks vorliegen. Erfindungsgemäß ist die Außenbuchse (i) vor dem Einfügen des Lagerelementes (ii) und der Innenbuchse (iii) in die Außenbuchse (i) bereits Teil der Karosserie, d.h. fest mit der Karosserie montiert, beispielsweise verschraubt oder verschweißt.

Als Objekte, die mittels des Rundlagers insbesondere mit der Karosserie eines Automobils oder eines Lastkraftwagens gelagert werden sollen, kommen beispielsweise alle Arten von Aggregaten, Fahrschemeln, Lenkern, Getrieben und/oder Anbauteilen, bevorzugt Aggregate, Lenker und/oder Getriebe, besonders bevorzugt Hinterachsgetriebe in Frage.

Diese mit dem bevorzugt dämpfend wirkenden Rundlager zu lagernden Teile können beispielsweise dadurch mit den Rundlager befestigt werden, dass man sie mit Hilfe Schrauben-, Bolzen, Stift-, Niet- oder anderen form- oder kraftschlüssigen Verbindungen, bevorzugt Schrauben-, Bolzen-, Stift-, Niet-Verbindungen befestigt, bevorzugt mit Hilfe der hohlen Innenbuchse.

Bevorzugt wird man entsprechend an der Innenbuchse (iii) Aggregate, Lenker und/oder Getriebe, besonders bevorzugt Hinterachsgetriebe befestigen und somit bevorzugt mit der Karosserie eines Automobils oder eines Lastkraftwagens bevorzugt schwingungsdämpfend verbinden. Ebenso ist es denkbar, dass diese Lager beispielsweise in die Lagerschilde von Getrieben, Aggregaten eingebracht werden, die dann mit der Karosserie verbunden werden.

Nach der Montage, d.h. dem Einschieben oder Einpressen von (ii) und (iii) in den Hohlraum von (i) kann das Rundlager als fertiggestellt betrachtet werden, oder es kann durch plastische Verformung der Außenhülse oder Zusatzteile oder ein Montagehilfsmittel, das adhäsiv wirkt, ein äußerer Festsitz realisiert werden. Durch geeignete Maßnahmen kann der Festsitz auch auf der Innenbuchse geschaffen werden. Somit kann man die Innenbuchse (iii) mit dem hohlen Lagerelement (ii) in die Außenhülse (i) pressen und anschließend das Lagerelement durch kraft-, form- oder stoffschlüssige Verbindung mit Außen-und/oder Innenhülse in der Bewegung längs seiner Achse hindern.

Beim Einpressen des Lagerelementes (ii) und der Innenbuchse (iii) in den Hohlraum der Außenbuchse (i), bevorzugt auch bei der Montage der Innenbuchse (iii) in den Hohlraum des Lagerelementes (ii), kann man gegebenenfalls ein Einpresshilfsmittel benutzt wird, das reibungsvermindernde Eigenschaften besitzt. In Frage kommen beispielsweise gängige Schmierstoffe oder Seifen. Bevorzugt sind allerdings Einpresshilfsmittel, die neben reibungsvermindernden Eigenschaften, auch adhäsive Eigenschaften aufweisen, d.h. nach der Montage von (iii) in (ii) und (ii) in (i) die Komponenten (i) mit (ii) und/oder (ii) mit (iii) verkleben.

Die Innenbuchse (iii) kann auf üblichen Materialien basieren, beispielsweise Metallen, z.B. Stahl, Eisen und/oder Aluminium oder harten Kunststoffen, z.B. TPU, umfasst. Die Innenbuchse (iii) verfügt über eine Innenbohrung üblicherweise zur Aufnahme eines Befestigungsbolzen. Der Außendurchmesser ergibt sich aus Festigkeitsgründen.

Bei Applikationen, bei denen keine haftende Verbindung zwischen der dem Lagerelement zugewandten Oberfläche der Innenhülse gefordert wird, kann diese mit einem, bevorzugt aufgesetzten Kragen, der bevorzugt senkrecht zur Innenbohrung und bevorzugt auf der äußeren Oberfläche der Innenbuchse (iii) umlaufend ist, versehen werden. Dabei kann dieser in Durchmesser, Dicke, Ausführung und Anzahl variieren. Der Kragen bildet bei radialer Belastung an den Flanken die bevorzugte Reibfläche und an der Stirnseite die Wegbegrenzung bei der Einfederung. Diese Kontur bietet ebenfalls eine besonders vorteilhafte Charakteristik bei auftretenden kardanischen Belastungen. Bevorzugt wird die Innenbuchse in axialer Ausrichtung nicht vom Lagerelement (ii) überragt.

Das Lagerelement (ii) kann aus einem oder mehreren Einzelteilen, die elastische Eigenschaften aufweisen, bestehen. Werden mindestens zwei Lagerelemente verwendet, so können diese je nach Anforderung quasi in einem Stecksystem zum vollständigen Lagerelement zusammengefügt werden, wobei allgemein bekannten "Steck"-Verfahren gewählt werden können, z.B. Nut-Feder. Damit können Lagerelemente mit unterschiedlichen Eigenschaften verwendet werden, die je nach ihrer Anordnung im Rundlager spezifische Anforderungen übernehmen können. Werden mindestens zwei Lagerelemente (ii) eingesetzt, weisen diese bevorzugt unterschiedliche Dichten und somit unterschiedliche mechanische und dynamische Eigenschaften auf. Während beispielsweise ein Lagerelement (ii) aus einem mikrozelligen PUR mit geringer Dichte bestehen kann um im Einsatzfall durch die Relativbewegung zur Innen- und Außenbuchse viel Dämpfung zu erzeugen, kann ein weiteren Lagerelement (ii) im Rundlager aus einem mikrözelligen Polyurethan mit hoher Dichte gefertigt sein, um dynamische Steifigkeiten zu gewährleisten und um die max. Verformung zu reduzieren. Erfindungsgemäß kann somit auf speziellen Anforderungen eingegangen werden. Das erfindungsgemäße Lagerelement (ii) basiert üblicherweise auf Gummi oder zelligen Polyisocyanat-Polyadditionsprodukten, bevorzugt auf zelligen Polyisocyanat-Polyadditionsprodukten. Besonders bevorzugt basiert das Lagerelement (ii) auf zelligen Polyisocyanat-Polyadditionsprodukten, bevorzugt auf der Basis von zelligen Polyurethanelastomeren, die ggf. Polyharnstoffstrukturen enthalten können, besonders bevorzugt auf der Basis von zelligen Polyurethanelastomeren bevorzugt mit einer Dichte nach DIN 53 420 von 200 bis 1100, bevorzugt 300 bis 800 kg/m³, einer Zugfestigkeit nach DIN 53571 von ≥ 2, bevorzugt 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771. Die Herstellung erfolgt üblicherweise durch Umsetzung von Isocyanaten mit gegenüber Isocyanaten reaktiven Verbindungen. Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Bevorzugt weisen die zelligen Polyisocyanat-Polyadditionsprodukten einen Druckverformungsrest kleiner 25 % nach DIN 53572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80 °C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird.

Die Außenbuchse (i) kann auf üblichen Materialien basieren, beispielsweise Metallen, z.B. Stahl, Eisen und/oder Aluminium oder harten Kunststoffen, z.B. TPU. Bevorzugt basiert die Außenbuchse auf dem gleichen Materialien wie das Objekt, in dem sie zum Einsatz kommen soll, besonders bevorzugt, beispielsweise im Falle der Montage in Karosserien, auf Stahl und/oder Aluminium, insbesondere Stahl. Die Außenbuchse (i) verfügt über einen Außendurchmesser und einen Innendurchmesser, die in den Abmaßen und Ausführungen variieren können. Die Erfindung umfasst sowohl kalibrierte und unkalibrierte Buchsen.

## Patentansprüche

1. Verfahren zur Herstellung von Rundlagern enthaltend (i) hohle Außenbuchse, (ii) hohles Lagerelement und (iii) hohle Innenbuchse, wobei die Außenbuchse in dem Objekt, das das Rundlager enthalten soll, vorhanden ist und man anschließend das Lagerelement (ii) und die hohle Innenbuchse (iii) in die vormontierte Außenbuchse (i) presst, **dadurch gekennzeichnet, dass** man zur Montage des (ii) hohlen Lagerelementes und der (iii) hohlen Innenbuchse in die vorhandene Außenbuchse (i) eine Einpressvorrichtung (iv) verwendet, die mindestens einen Stempel (v) und mindestens eine äußere Hülse (vi) aufweist, wobei der Stempel zweiteilig aufgebaut ist und ein Teil des Stempels, (va) die Innenbuchse (iii) drückt und ein weiterer Teil (vb), der mit (va) synchron bewegt wird, das Lagerelement presst.

2. Verfahren gemäß Anspruch 1, **dadurch gekennzeichnet, dass** man die hohle Innenbuchse (iii) erst in dem Hohlraum des hohlen Lagerelements (ii) positioniert und anschließend das hohle Lagerelement (ii) enthaltend die hohle Innenbuchse (iii) in die vorhandene Außenbuchse (i) presst.

3. Verfahren gemäß Anspruch 1, **dadurch gekennzeichnet, dass** man das Lagerelement (ii) unter Vorspannung in die Außenbuchse (i) presst.

4. Verfahren gemäß Anspruch 1; **dadurch gekennzeichnet, dass** man vor der Montage des (ii) hohlen Lagerelementes und der (iii) hohlen Innenbuchse in die vorhandene Außenbuchse (i) das oder die hohle Lagerelemente (ii) und die hohle(n) Innenbuchse(n) (iii) auf dem Stempel (v) und zumindest teilweise innerhalb der äußeren Hülse (vi) positioniert.

5. Verfahren gemäß Anspruch 1 oder 4, **dadurch gekennzeichnet, dass** die äußere Hülse (vi) konisch zuläuft und aufgrund dieser Verjüngung das hohle Lagerelement (ii) beim Einpressen mittels des Stempels (v) in die vorhandene Außenbuchse (i) im Radius gestaucht wird.

6. Verfahren gemäß einem der Ansprüche 1 bis 5, **dadurch gekennzeichnet, dass** es sich bei dem Objekt, das das Rundlager enthalten soll, um die Karosserie oder das Fahrwerk eines Automobils oder eines Lastkraftwagens handelt.

7. Verfahren gemäß einem der Ansprüche 1 bis 6, **dadurch gekennzeichnet, dass** man an der Innenbuchse (iii) Aggregate, Lenker und/oder Getriebe mit Hilfe von Schrauben-, Bolzen-, Stift-, Niet- oder anderen form- oder kraftschlüssigen Verbindungen befestigt.

8. Verfahren gemäß Anspruch 1, **dadurch gekennzeichnet, dass** man die Innenbuchse (iii) mit dem hohlen Lagerelement (ii) in die Außenhülse (i) presst und anschließend das Lagerelement durch kraft-, form- oder stoffschlüssige Verbindung, mit Außen-und/ oder Innenhülse in der Bewegung längs seiner Achse gehindert wird.

9. Verfahren gemäß Anspruch 1, **dadurch gekennzeichnet, dass** das hohle Lagerelement (ii) auf zelligen Polyisocyanat-Polyadditionsprodukten basiert.

10. Verfahren gemäß einem der Ansprüche 1 bis 9, **dadurch gekennzeichnet, dass** man beim Einpressen des Lagerelementes (ii) und der Innenbuchse (iii) in den Hohlraum der Außenbuchse (i) ein Einpresshilfsmittel benutzt wird, das reibungsvermindernde Eigenschaften besitzt.

## Claims

1. A method for the production of round bearings comprising (i) a hollow outer bush, (ii) a hollow bearing element and (iii) a hollow inner bush, the outer bush being present in the object which is to comprise the round bearing and the bearing element (ii) and the hollow inner bush (iii) then being pressed into the premounted outer bush (i) wherein a pressing-in apparatus (iv) which has at least one ram (v) and at least one outer sleeve (vi) is used for mounting the (ii) hollow bearing element and the (iii) hollow inner bush in the outer bush (i) present, the ram consisting of two parts and one part of the ram (va) pressing the inner bush (iii), and a further part (vb), which is moved synchronously with (va), pressing the bearing element.

2. A method as claimed in claim 1, wherein the hollow inner bush (iii) 3 is first positioned in the cavity of the hollow bearing element (ii) and the hollow bearing element (ii) comprising the hollow inner bush (iii) is then pressed into the outer bush (i) present.

3. A method as claimed in claim 1, wherein the bearing element (ii) is pressed under initial stress into the outer bush (i).

4. A method as claimed in claim 1, wherein, before the (ii) hollow bearing element and the (iii) hollow inner bush are mounted in the outer bush (i) present, the hollow bearing element or elements (ii) a and the hollow inner bush or bushes (iii) is or are positioned on the ram (v) and at least partly inside the outer sleeve (vi).

5. A method as claimed in claim 1 or 4, wherein the outer sleeve (vi) tapers conically and, owning to this tapering, the hollow bearing element (ii) is compressed radially on pressing by means of the ram (v) into the outer bush (i) present.

6. A method as claimed in any of claims 1 to 5, wherein the object which is to comprise the round bearing is the bodywork or the chassis of an automobile or of a truck.

7. A method as claimed in any of claims 1 to 6, wherein aggregates, connecting rods and/or gears are fastened to the inner bush (iii) with the aid of screw, bolt, pin, rivet or other interlocking or frictional connections.

8. A method as claimed in claim 1, wherein the inner bush (iii) with the hollow bearing element (ii) is pressed into the outer bush (i) and the bearing element is then prevented from moving along its axis by a frictional, interlocking or material connection with outer and/or inner bush.

9. A method as claimed in claim 1, wherein the hollow bearing element (ii) is based on a cellular polyisocyanate polyadduct.

10. A method as claimed in any of claims 1 to 9, wherein a pressing-in aid which has friction-reducing properties is used when pressing the bearing element (ii) and the inner bush (iii) into the cavity of the outer bush (i).

## Revendications

1. Procédé de fabrication de paliers ronds, contenant (i) une douille externe creuse, (ii) un élément' de palier creux et (iii) une douille interne creuse, la douille externe étant prévue dans l'objet qui doit contenir le palier rond, et l'élément de palier (ii) et la douille interne creuse (iii) étant ensuite pressés dans la douille externe (i) prémontée, **caractérisé en ce que** pour le montage de l'élément de palier creux (ii) et de la douille interne creuse (iii) dans la douille externe existante (i), on utilise un dispositif de pressage (iv) qui présente au moins un poinçon (v) et au moins une manchon externe (vi), le poinçon étant réalisé en deux parties et une partie du poinçon (va) pressant la douille interne (iii) et une autre partie (vb), qui est déplacée de manière synchrone avec (va), pressant l'élément de palier.

2. Procédé selon la revendication 1, **caractérisé en ce que** l'on positionne d'abord à douille interne creuse (iii) dans la cavité de l'élément de palier creux (ii) et ensuite l'élément de palier creux (ii) contenant la douille interne creuse (iii) dans la douille externe existante (i).

3. Procédé selon la revendication 1, **caractérisé en ce que** l'on presse l'élément de palier (ii) avec précontrainte dans la douille externe (i).

4. Procédé selon la revendication 1, **caractérisé en ce que** l'on positionne, avant le montage de l'élément de palier creux (ii) et de la douille interne creuse (iii) dans la douille externe existante (i), le ou les éléments de palier creux (ii) et la ou les douilles internes creuses (iii) sur le poinçon (v) et au moins en partie à l'intérieur du manchon externe (vi).

5. Procédé selon la revendication 1 ou 4, **caractérisé en ce que** le manchon externe (vi) se termine avec une forme conique et en raison de ce rétrécissement, le rayon de l'élément de palier creux (ii) est comprimé dans la douille externe existante (i) lorsque le poinçon (v) le presse dans la douille externe existante (i).

6. Procédé selon l'une quelconque des revendications 1 à 5, **caractérisé en ce que** l'objet qui doit contenir le palier rond est la carrosserie ou le châssis d'une automobile ou d'un poids lourd.

7. Procédé selon l'une quelconque des revendications 1 à 6, **caractérisé en ce que** l'on fixe sur la douille interne (iii) des unités, des bras oscillants et/ou des mécanismes à l'aide de connexions par vissage, boulonnage, goupillage, rivetage ou d'autres connexions par engagement par coopération de forme ou par force.

8. Procédé selon la revendication 1, **caractérisé en ce que** l'on presse la douille interne (iii) avec l'élément de palier creux (ii) dans le manchon externe (i) et ensuite l'élément de palier est immobilisé par la connexion par engagement par force, par coopération de forme ou de matière avec le manchon externe et/ou interne, dans son mouvement le long de son axe.

9. Procédé selon la revendication 1, **caractérisé en ce que** l'élément de palier creux (ii) est à base de produits cellulaires de polyaddition à un polyisocyanate.

10. Procédé selon l'une quelconque des revendications 1 à 9, **caractérisé en ce que** l'on utilise lors du pressage de l'élément de palier (ii) et de la douille interne (iii) dans la cavité de la douille externe (i) un agent d'aide au pressage, qui possède des propriétés réduisant les frottements.
